# EUROPEAN PATENT APPLICATION

(11) **EP 4 752 712 A1**
(43) Date of publication of application: **03.06.2026**
(21) Application number: 24315539.7
(22) Date of filing: 27.11.2024
(51) Int. Cl.: G06F 9/4401, G06F 9/455

(54) **DEVICE, SYSTEM AND METHOD FOR REMOTE OPERATION OF LOCAL PERIPHERAL DEVICES**

(71) Applicant: Amadeus S.A.S., 06410 Biot (FR)
(72) Inventor: Mithiaux, Elisabeth, 06410 Biot (FR); Kuper, Mark, 06410 Biot (FR)
(74) Representative: Samson & Partner Patentanwälte mbB

(57) **Abstract**

A computing system (126) registers peripheral devices (110-1) in communication with a first computing unit (106-1) via local communication links (110-1). Registering peripheral devices (110-1) virtualizes peripheral devices (110-1) at the computer system (126) thereby making peripheral devices (110-1) available for use by computing units (106) in communication with the computer system (126), and wherein registering peripheral devices (110-1) occurs via a peripheral device virtualization application (112-1) installed at the first computing unit (106-1) in communication with the computer system (126). The computing system (126) receives from a second computing unit (106-2), a request for a list (120) of peripheral devices (110-1), and provides back the list (120) of peripheral devices (110-1). The computing system (126) receives, from the second computing unit (106-2), a selection of a peripheral device (110-1), of the peripheral devices (110-1), and enables use of the peripheral device (110-1) at the first computing unit (106-1), by the second computing unit (106-2), via the peripheral device virtualization application (112-1) at the first computing unit (106-1).

## Description

### FIELD

The specification relates generally to control of peripheral devices, and specifically to a device, system and method for remote operation of local peripheral devices.

### BACKGROUND

In certain environments, such as airports, there may be multiple workstations (and the like) distributed around the environment, which may be local or remote from each other. Due to space restrictions, as one example, a given workstation may not have local access for peripheral devices that the given workstation may require for functioning. In the example of an airport, for example at a check-in counter or security counter, and the like, a workstation may need access to a boarding pass reader, a biometric reader, a printer, a scanner, and the like, amongst other possibilities and there may not be enough space around the workstation for such peripheral devices. While another workstation may be locally connected to one or more of such peripherals, such peripherals may be older and may be connected to the other workstation via a cable and a serial port. Hence, such peripheral devices may not be easily shared between workstations without physically detaching from them a first workstation and connecting to a second workstation, which instantly renders such peripheral devices incapable for use by the first workstation.

Alternatively, while one more of such peripherals may be wirelessly but locally connected to a first workstation, the environment may be such that wirelessly connecting one more of such peripherals to a second given workstation via the cloud may be challenging due to the complexity of networks in the environment.

### SUMMARY

A first aspect of the present specification provides a method comprising: registering, via a computer system, one or more peripheral devices in communication with a first computing unit via one or more local communication links, wherein registering the one or more peripheral devices virtualizes the one or more peripheral devices at the computer system thereby making the one or more peripheral devices available for use by computing units in communication with the computer system, and wherein registering the one or more peripheral devices occurs via a peripheral device virtualization application installed at the first computing unit in communication with the computer system; receiving, via the computer system, from a second computing unit, a request for a list of the one or more peripheral devices; providing, via the computer system, to the second computing unit, the list of the one or more peripheral devices; receiving, via the computer system, from the second computing unit, a selection of a peripheral device, of the one or more peripheral devices; and enabling, via the computer system, use of the peripheral device at the first computing unit, by the second computing unit, via the peripheral device virtualization application at the first computing unit.

The peripheral device virtualization application may be active when the first computing unit is on regardless of whether the first computing unit is logged into by a user.

Registering the one or more peripheral devices may comprise: receiving, at the computer system, from the peripheral device virtualization application, registration data indicating the one or more peripheral devices; and storing the registration data at a memory.

Registering the one or more peripheral devices may occur via a device server of the computer system that is in communication with a device client of the computer system.

Receiving the request for the list of the one or more peripheral devices, providing the list of the one or more peripheral devices to the second computing unit, and receiving the selection of the peripheral device may occur via a web-based interface with the second computing unit, the web-based interface implemented via a device client of the computer system that is in communication with a device server of the computer system that registers the one or more peripheral devices.

Enabling use of the peripheral device by the second computing unit may comprise: exchanging data between two or more of the peripheral device, the second computing unit, the peripheral device virtualization application, a device server of the computer system, and a device client of the computer system.

Enabling use of the peripheral device by the second computing unit may comprise: providing data for processing by the peripheral device, from the second computing unit to the peripheral device, via a device client of the computer system.

Enabling use of the peripheral device by the second computing unit may comprise: providing data generated by the peripheral device to a device client of the computer system, the data associated with the second computing unit.

The one or more local communication links may comprise at least one wired communication link.

The one or more local communication links may comprise at least one wireless local communication link.

A second aspect of the present specification provides a computer system comprising: a communication interface; a controller; and a computer-readable storage medium having stored thereon program instructions that, when executed by the controller, causes the controller to perform a set of operations comprising: registering one or more peripheral devices in communication with a first computing unit via one or more local communication links, wherein registering the one or more peripheral devices virtualizes the one or more peripheral devices at the computer system thereby making the one or more peripheral devices available for use by computing units in communication with the computer system, and wherein registering the one or more peripheral devices occurs via a peripheral device virtualization application installed at the first computing unit in communication with the computer system; receiving, from a second computing unit, a request for a list of the one or more peripheral devices; providing, to the second computing unit, the list of the one or more peripheral devices; receiving, from the second computing unit, a selection of a peripheral device, of the one or more peripheral devices; and enabling use of the peripheral device at the first computing unit, by the second computing unit, via the peripheral device virtualization application at the first computing unit.

The peripheral device virtualization application may be active when the first computing unit is on regardless of whether the first computing unit is logged into by a user.

Registering the one or more peripheral devices may comprise: receiving, at the computer system, from the peripheral device virtualization application, registration data indicating the one or more peripheral devices; and storing the registration data at a memory.

Registering the one or more peripheral devices may occur via a device server of the computer system that is in communication with a device client of the computer system.

Receiving the request for the list of the one or more peripheral devices, providing the list of the one or more peripheral devices to the second computing unit, and receiving the selection of the peripheral device may occur via a web-based interface with the second computing unit, the web-based interface implemented via a device client of the computer system that is in communication with a device server of the computer system that registers the one or more peripheral devices.

Enabling use of the peripheral device by the second computing unit may comprise: exchanging data between two or more of the peripheral device, the second computing unit, the peripheral device virtualization application, a device server of the computer system, and a device client of the computer system.

Enabling use of the peripheral device by the second computing unit may comprise: providing data for processing by the peripheral device, from the second computing unit to the peripheral device, via a device client of the computer system.

Enabling use of the peripheral device by the second computing unit may comprise: providing data generated by the peripheral device to a device client of the computer system, the data associated with the second computing unit.

The one or more local communication links may comprise at least one wired communication link.

The one or more local communication links may comprise at least one wireless local communication link.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for remote operation of local peripheral devices, according to non-limiting examples.
FIG. 2 depicts a computing device for remote operation of local peripheral devices, according to non-limiting examples.
FIG. 3 depicts a method for remote operation of local peripheral devices, according to non-limiting examples.
FIG. 4 depicts the system of FIG. 1 implementing a method for remote operation of local peripheral devices, according to non-limiting examples.
FIG. 5 depicts the system of FIG. 1 continuing to implement a method for remote operation of local peripheral devices, according to non-limiting examples.
FIG. 6 depicts the system of FIG. 1 continuing to implement a method for remote operation of local peripheral devices, according to non-limiting examples.
FIG. 7 depicts the system of FIG. 1 continuing to implement a method for remote operation of local peripheral devices, according to non-limiting examples.

### DETAILED DESCRIPTION

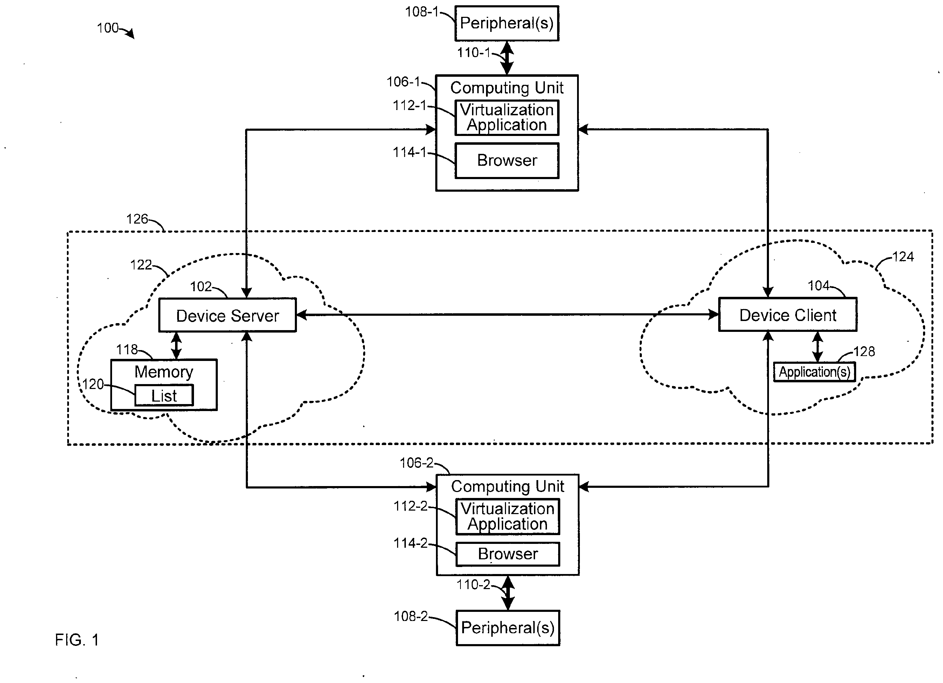

FIG. 1 depicts a system 100 for remote operation of local peripheral devices. The various components of the system 100 (interchangeably referred to hereafter as the system 100) are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like, except where otherwise indicated.

The system 100 comprises a device server 102, a device client 104, and at least two computing units 106-1, 106-2 (interchangeably referred to, collectively, as the computing units 106 and, generically, as a computing unit 106; this convention will be used elsewhere in the present specification). As depicted the computing units 106-1, 106-2 are in local communication with one or more respective peripheral devices 108-1, 108-2 (e.g., peripheral devices 108 and/or a peripheral device 108), via respective local communication links 110-1, 110-2 (e.g., local communication links 110 and/or a local communication link 110).

Each computing unit 106 implements a respective peripheral device virtualization application 112-1, 112-2 (e.g., virtualization applications 112 and/or a virtualization application 112) and, optionally, a respective browser application 114-1, 114-2 (e.g., browser applications 114 and/or a browser application 114). In general, the virtualization applications 112 enable remote use of the peripheral devices 108 via the device server 102, and the browser applications 114 may enable selection of peripheral device 108 for remote use, as described herein.

As depicted, the device server 102 has access to a memory 118 that stores a list 120 of the peripheral devices 108 though, initially, the list 120 may be empty until the computing units 106 register their respective peripheral devices 108 with the device server 102. While the memory 118 is depicted as external to the device server 102, the memory 118 may be a component of the device server 102. Furthermore, the memory 118 and/or the list 120 may be provided in the form of a database, and/or peripheral devices 108 listed at the list 120 may be organized into categories including, but not limited to, using Kafka topics, and the like.

As depicted, the computing units 106 are in communication with both the device server 102 and the device client 104, but are generally not in direct communication with each other. Rather, communication between the computing units 106 for remote operation of the peripheral devices 108 is understood to occur via the device server 102

Furthermore, while only two computing units 106 are depicted, the system 100 may comprise more than two computing units 106. Indeed, the number of computing units 106 is understood to be at least two, but may be any suitable number of computing units 106, including, but not limited to, tens to hundreds of computing units 106. When a number of the computing units 106 are in the tens to hundreds, and deployed throughout an environment, such as an airport environment, the associated peripheral devices 108 may be organized by location at the list 120.

Furthermore, as depicted, the device server 102 (e.g., and the memory 118) may be a component of a first network 122 and the device client 104 may be a component of a second network 124, though the device server 102 and the device client 104 may be in communication with each other via the networks 122, 124. The networks 122, 124 are depicted in outline for clarity.

Furthermore, as depicted, the combination of the device server 102 and the device client 104 (and optionally the networks 122, 124) may comprise a computer system 126, which is understood to be subset of the system 100. The computer system 126 is depicted in outline for clarity.

Details of the components of the system 100 are next described in the context of an airport environment.

For example, in the context of an airport environment, the first network 122 may comprise a network that is generally used for deploying certain types of third party devices in the airport environment, such as third party biometric check-in kiosks (e.g., that may use facial scanning to biometrically register passengers), and the second network 124 may comprise a departure control system network used by airlines, and the like for conventional passenger check-in, boarding, and the like. Applications operated by computing devices in the two networks 122, 124 may communicate to coordinate passenger check-in, and/or passenger boarding, and the like. For example, third party biometric check-in kiosks that are components of the first network 122 may communicate with applications 128 of the second network 124 to facilitate more conventional passenger check-in. The applications 128 may, as depicted, be in communication with the device client 104.

It is further understood that an application 128 may be implemented via a computing unit 106 accessing the application 128 via a respective browser application 114. Put another way, an application 128 may be implemented remotely from a computing unit 106, but in association with a computing unit 106, via a respective browser application 114. For example, the cloud devices at the second network 124 may host applications 128 on behalf of a computing unit 106, and communication with a computing unit 106 and a cloud device hosting the application 128 may occur via the device client 104 and a respective device client (not depicted for simplicity) at the computing unit 106, as described in more detail below.

However, while the device server 102 and the device client 104 are depicted as being deployed in the different respective networks 122, 124, the device server 102 and the device client 104 may alternatively be deployed in a same network, though, in practice, the device server 102 and the device client 104 being deployed in the different respective networks 122, 124 is typical of an airport environment.

Indeed, the device server 102 may be deployed in the first network 122 as virtualization of the peripheral devices 108 for remote operation thereof may be provided via third-party applications such as the virtualization applications 112, and the device client 104 may be deployed in the second network 124 to take advantage of pre-existing communication protocols and/or functionality, and the like, between the browser applications 114 and the second network 124, for example that may be used to communicate with conventional passenger check-in and/or boarding applications 128 that may be deployed via the second network 124.

Indeed, by deploying the device client 104 in the second network 124, the browser applications 114 need not be configured with permissions, and the like, for the first network 122, which may be challenging to set up on a computing unit 106 by computing unit 106 basis.

Furthermore, by deploying the device client 104 in the second network 124, data collected by a remote peripheral device 108 on behalf of a computing unit 106 to which the remote peripheral device 108 is not connected, may be provided to applications 128 of the second network 124.

The device server 102 may comprise one or more respective computing devices and/or one or more respective servers and/or one or more respective cloud computing devices, and the like. Similarly, a computing device, and the like, implementing the device client 104 may comprise one or more respective computing devices and/or one or more respective servers and/or one or more respective cloud computing devices, and the like However, in some examples, functionality of the device server 102 and the device client 104 may be combined in one or more cloud computing devices though, in practice, the device server 102 and the device client 104 being separate is typical of an airport environment as described above.

The computing units 106 may comprise respective workstations, terminals, computing devices, laptops that may use one or more local peripheral devices 108 for any suitable functionality. For example, the peripheral devices 108 may comprise a boarding pass reader, a biometric reader, a printer, a scanner and the like, amongst other possibilities. Indeed, one or more of the peripheral devices 108 may communicate with other components and/or applications 128 of the second network 124 to perform certain respective functionality for passenger check-in, and/or boarding, and the like as has already been described. For example, when a peripheral device 108 comprises a boarding pass reader, boarding pass data read from a boarding pass may be provided to a passenger check-in application 128 at the second network 124.

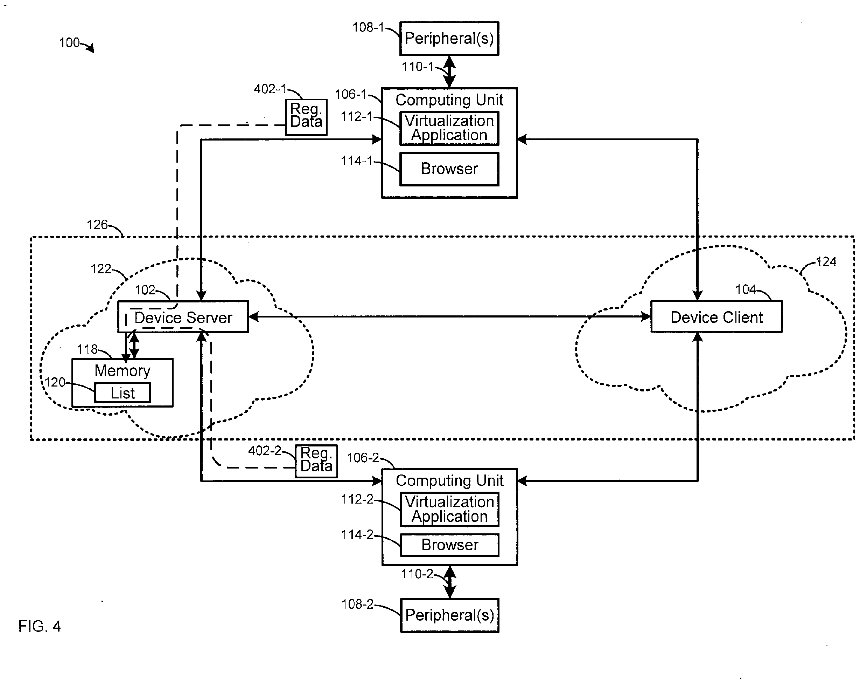

Hence, in some examples, at least one of the computing units 106 may be specifically configured for interaction with a user, and the like, for example to operate respective local peripheral devices 108 locally to perform related functionality. In these examples, such computing units 106 may comprise a display screen (e.g., see FIG. 4) and one or more input devices, such as one or more of a keyboard, a pointing device (e.g., a mouse, and/or a trackpad), a microphone (e.g., for voice control of a computing unit 106), and the like.

However, in other examples at least one the computing units 106 may comprise a computing unit 106 dedicated to enabling remote operation of respective local peripheral devices 108, for example by another computing unit 106. In this example, such a computing unit 106 dedicated to enabling remote operation of respective local peripheral devices 108 may comprise a computing unit based on Arduino^{™} hardware, Raspberry Pi^{™} hardware and the like; such computing units may lack a display screen and/or an input device.

When the system 100 comprises three or more computing units 106, at least one of the computing units 106 may be operated by a user and one or two of the computing units 106 may be dedicated to enabling remote operation of respective local peripheral devices 108. However, in other examples, all of the computing units 106 may be configured for interaction with a user.

The local communication links 110 may be wired or wireless. In particular examples, a local communication link 110 may comprise a cable connecting a peripheral device 108 to a serial port of a respective computing unit 106.

In other examples, a local communication link 110 may comprise a WiFi^{™} or Bluetooth^{™} wireless communication link between a peripheral device 108 and a respective computing unit 106; in this example, it is understood that the wireless communication link does not otherwise connect the peripheral device 108 to the networks 122, 124.

Put another way, in these examples, a peripheral device 108 may be operated via a respective computing unit 106, but the computing unit 106 communicates with components of the networks 122, 124 and not the peripheral device 108.

Furthermore, while only one peripheral device 108 and one local communication link 110 is depicted for a computing unit 106, it is understood that a computing unit 106 may be communicatively coupled with any suitable number of peripheral devices 108 via respective local communication links 110. Put another way, for each peripheral device 108, there may be respective local communication link 110 in a one-to-one relationship (e.g., one local wired communication link 110 for a given peripheral device 108 or one local wireless communication link 110 for a given peripheral device 108, though different peripheral devices 108 may be communicatively coupled to a given computing unit 106 via a combination of respective wired or wireless local communication links 110).

It is further understood that, when a peripheral device 108 is communicatively coupled to a computing unit 106, the peripheral device 108 and the computing unit 106 may communicate to register the peripheral device 108 with the computing unit 106. Such registration may include, but is not limited to, connection information that may include port information identifying which port the peripheral device 108 is connected to at the computing unit 106, a local WiFi^{™} internet protocol (IP) address or Bluetooth^{™} address of the peripheral device 108, and the like. Such connection information is understood to be sufficient to enable the computing unit 106 to communicate with the peripheral device 108.

In general, a virtualization application 112 is generally configured to register local peripheral devices 108 with the device server 102, which may store registration information at the list 120. Such registration information may identify a type of a peripheral device 108 and their respective location, as a location of a respective computing unit 106. The respective location may be preconfigured as natural language text at a respective computing unit 106, and provided to the device server 102 in the registration information. The device server 102 may organize the list 120 by location, such that peripheral devices 108 within a given threshold distance of each other (e.g., 5 meters, 10 meters, 15 meters, amongst other possibilities) are indicated at the list 120. However, such organization may also occur by areas of the airport environment, such as gate areas, security areas, and the like.

Furthermore, while not depicted, it is understood that the virtualization applications 112 generally comprise respective device clients for communication with the device server 102; in these examples, such device client may be modules of the virtualization applications 112 and may, for example, comprise plug-ins for respective virtualization applications 112. Alternatively, or in addition, such device clients may be separate from the virtualization applications 112 at the computing units 106, and/or implemented as separate applications at the computing units 106. In general, such device clients may be used to communicate with the device server 102, as described herein. Hence, for example, when a virtualization application 112 registers local peripheral devices 108 with the device server 102, such registration is understood to be via an associated device client that communicates with the virtualization application 112 to receive registration data therefrom, and provide the registration data to the device server 102.

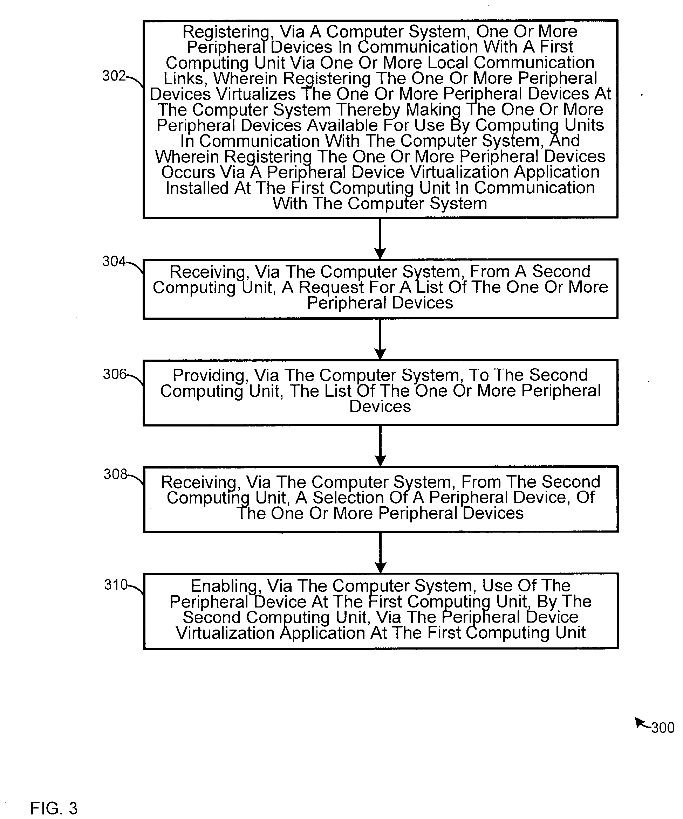

Once the peripheral devices 108 for a first computing unit 106 are registered at the device server 102, and in particular at the list 120, a second computing unit 106 may access the list 120 via a browser application 114 and the device client 104 to select a given peripheral device 108 and operate the given peripheral device 108 remotely as is described herein with respect to FIG. 3 to FIG. 7.

For example, a first computing unit 106 may register their respective one or more peripheral devices 108 at the device server 102, which populates the list 120, and a second computing unit 106 may request the list 120 of the one or more peripheral devices 108 communicatively coupled to the first computing unit 106, for example from the device client 104.

The device server 102 may provide the list 120 to the device client 104, and the second computing unit 106 may access the list 120 via a respective browser 114 using a web interface provided by the device client 104. A user of the second computing unit 106 may interact with the list 120 provided at the respective browser 114 to select a peripheral device 108 communicatively coupled to the first computing unit 106 for use by the second computing unit 106. Once selected, a peripheral device 108 of the first computing unit 106 is generally enabled for use by the second computing unit 106, via the peripheral device virtualization application 112 at the first computing unit 106. For example, presuming the selected peripheral device 108 comprises a printer, the second computing unit 106 may be operated to print a document at the selected peripheral device 108, for example by way of the second computing unit 106 transmitting print data to the printer via the device client 104, which may transmit the print data to the device server 102, which provides the print data to the virtualization application 112 at the first computing unit 106.

In another example, presuming the selected peripheral device 108 comprises a scanner, the second computing unit 106 may be operated to control the scanner to scan a document at the selected peripheral device 108, which may include the user of the second computing unit 106 moving to the scanner to place a document on the scanner and pressing a "scan" button, and the like, at the scanner. Alternatively, or in addition, such a scanner may be "always" active and searching for a document to scan, such that the user of the second computing unit 106 may place a document to be scanner on or near the scanner, which may detect a presence of the document and scan the document. However, scan data that results from the scanner scanning the document is sent to the second computing unit 106 rather than the first computing unit 106 to which the scanner is communicatively coupled. Similar to the printer example, the scan data is transmitted to the second computing unit 106 via the virtualization application 112 at the first computing unit 106 and then to the device server 102 and the device client 104, which provides the scan data to the second computing unit 106, or any suitable application 128 (e.g., such as a passenger check-in application) at the second network 124. Indeed, in some examples, the device client 104 may provide the scan data to an application 128 at the second network when a browser 114 is used to access an application 128, and the scan data may not be provided to the second computing unit 106, but rather accessed at the application 128 via the browser 114. In yet further examples, the scan data may be provided to an application 128 without being accessed by the second computing unit 106 (e.g., via the browser 114), and/or the scan data may be provided to an application 128 that is different from an application 128 being accessed via the browser 114.

In another example, presuming the selected peripheral device 108 comprises a boarding pass reader, the second computing unit 106 may be operated to control the boarding pass reader to read a boarding pass at the selected peripheral device 108, which may include the user of the second computing unit 106 moving to the boarding pass reader to read a boarding pass using the boarding pass. However, the boarding pass data that results from the boarding pass reader reading the document is sent to the second computing unit 106 rather than the first computing unit 106 to which the boarding pass reader is communicatively coupled. Similar to the printer example and/or the scanner example, the boarding pass data is transmitted to the second computing unit 106 via the virtualization application 112 at the first computing unit 106 and then to the device server 102 and the device client 104, which provides the boarding pass data to the second computing unit 106, or any suitable application 128 (e.g., such as a passenger check-in application) at the second network 124. Alternatively, or in addition, the boarding pass data may be reviewed by the user of the second computing unit 106, for example via a display screen thereof, and subsequently transmitted to a passenger check-in application at the second network 124.

In such examples, any suitable peripheral device applications, such as printer applications, scanner applications, boarding pass reader applications, and the like, may be installed at the second computing unit 106, which may be operated by a user of the second computing unit 106 to remotely control a suitable selected peripheral 108 locally communicatively coupled to the first computing unit 106.

Alternatively, or in addition, such peripheral device applications may be provided via respective browser applications 114 accessing the applications 128. For example, rather than peripheral device applications being locally installed at a computing unit 106, such peripheral device applications may be stored at the second network 124 as an application 128, and provided to respective browser applications 114 via a web-based interface of the device client 104.

Alternatively, or in addition, an application 128 may provide a respective web-based interface to the browser applications 114 via the device client 104. Indeed, in these examples, the device client 104 may comprise a plug-in to an application 128. Furthermore, in examples where the device client 104 comprises a plug-in to an application 128, there may be a device client 104 per application 128.

Regardless, the second computing unit 106 operates as if the selected peripheral device 108 were locally communicatively coupled to the second computing unit 106.

Indeed, in the depicted example, the device client 104 may be used to select a peripheral device 108, and communication with the peripheral device 108 may occur via the device client 104, the device server 102 and a respective virtualization application 112 at the computing unit 106 to which the selected peripheral device 108 is communicatively coupled. Indeed, a web-based interface provided by the device client 104 and/or a suitable application 128 may be used both for peripheral device selection and for interfacing between the computing units 106 and remote peripheral devices 108, and/or for providing peripheral device applications 128.

In this manner, a peripheral device 108 communicatively coupled to a first computing unit 106 may appear to be local to a second computing unit 106.

Furthermore, the virtualization applications 112 may be active when a respective computing unit 106 is on (e.g., power is being provided to the respective computing unit 106) regardless of whether the computing unit 106 is logged into by a user. Indeed, the virtualization applications 112 may generally enable use of respective local peripheral devices 108 by other computing units 106 independent of whether or not a user has logged into a respective computing unit 106. Put another way, when a computing unit 106 is turned on, the computing unit 106 may be configured to automatically launch a respective virtualization application 112, which may operate in the background as the computing unit 106 performs other functions. Furthermore, a respective virtualization application 112 may be used to control a peripheral device 108 remotely, as described herein.

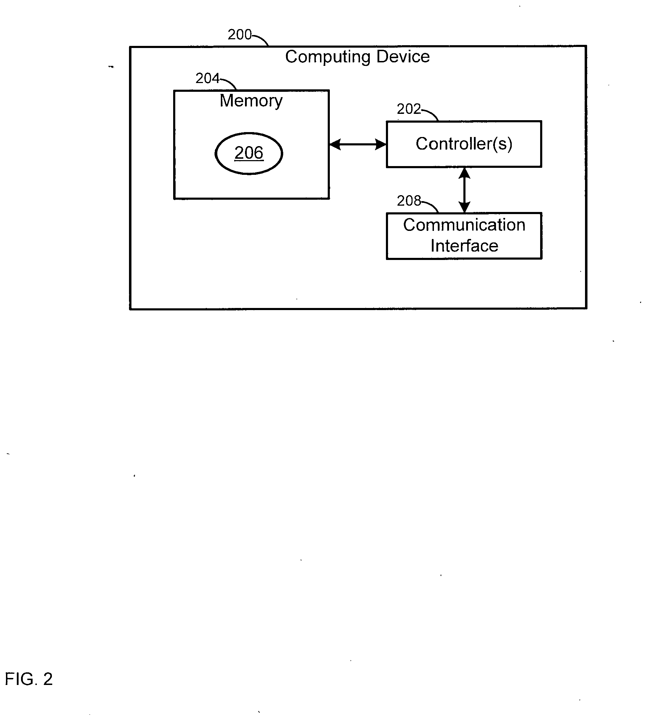

Turning to FIG. 2, certain components of a computing device 200 will be described. The components the computing device 200 may represent the components of any suitable component of the system 100, including, but not limited to, the device server 102, a computing unit 106, a peripheral device 108, or a cloud device implementing the device client 104 and/or a respective application 128.

While depicted as one device, in examples where the computing device 200 represents the device server 102 or a cloud device implementing the device client 104, the computing device 200 may comprise one or more computing devices and/or one or more servers and/or one or more cloud computing devices that may be geographically distributed.

However, in examples where the computing device 200 represents a computing unit 106 or a peripheral device 108, the computing device 200 may comprise one device.

As shown in FIG. 2, the computing device 200 includes at least one controller 202, which may be implemented as a plurality of processors, one or more multi-core processors, or specialized hardware accelerators such as central processing units (CPUs), graphics processing units (GPUs), tensor processing units (TPUs), and the like.

The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

Furthermore, when the computing device 200 represents the device server 102, the memory 204 may comprise at least a portion of the memory 118 and at least partially store the list 120.

The controller 202 is also interconnected with a communication interface 208, which enables the computing device 200 to communicate with the other components of the system 100 as described herein. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like.

In particular, when the computing device 200 comprises a computing unit 106 or a peripheral device 108, the communication interface 208 may comprise components for implementing the local communication links 110, as described herein.

However, in examples where the computing device 200 comprises a peripheral device 108, the communication interface 208 may comprise components for implementing the local communication links 110, as described herein and may exclude components for communicating with the networks 122, 124 and/or the device server 102 and the device client 104, and/or such components may be disabled and/or not configured for such communication.

While not depicted, the computing device 200 may also include input and output devices communicatively coupled to the controller 202, such as keyboards, pointing devices, display screens, speakers, microphones and the like.

The components of the computing device 200 mentioned above may be deployed in a single enclosure, or in a distributed format, which may depend on whether the computing device 200 comprises the device server 102 or a cloud device implementing the device client 104 and/or a respective application 128, or whether the computing device 200 comprises a computing unit 106 or a peripheral device 108. In some examples, therefore, the computing device 200 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 200; regardless, the controller 202 is understood to have access to the memory 204.

Furthermore the application 206 may comprise computer-readable programming instructions, executable by the controller 202.

As will be understood by those skilled in the art, the controller 202 executes the instructions of the application 206 in order to perform a set of operations defined by the instructions contained therein, and which are understood to be particular to the type of the computing device 200.

For example, a combination of the device server 102 and the device client 104 may implement the blocks of a method described with respect to FIG. 3. In the description below, the controller 202, and more generally the computing device 200 (or a combination of computing devices 200 such as the device server 102 and the device client 104), are understood to be configured to perform those actions. It will be understood that they are so configured via the execution (by the controller 202 and/or respective controllers of the device server 102 and the device client 104) of the instructions of the application stored in the memory 204. Put another way, the computing device 200 may comprise a computer-readable storage medium (e.g., a non-transitory computer-readable storage medium, such as the memory 204) having stored thereon program instructions that, when executed by the controller 202, causes a controller 202 and/or controllers 202 to perform a set of operations comprising the blocks of the method described with respect to FIG. 3.

The computing device 200 may comprise any other suitable components depending on the nature of the computing device 200. For example, when the computing device 200 comprises a peripheral device 108, the computing device 200 may comprise components for implementing specific functionality of the peripheral devices 108, such as printing components, scanner components, boarding pass reader components, and the like.

Attention is now directed to FIG. 3, which depicts a flowchart representative of a method 300 a method for remote operation of local peripheral devices. The operations of the method 300 correspond to machine readable instructions that are executed by the computer system 126 and more specifically the device server 102 and the device client 104, and/or yet more specifically respective controllers 202 thereof. As such, in the description of the method 300 below, the method 300 is referred to as being implemented by a controller 202 and/or the computer system 126. In the illustrated example, the instructions represented by the blocks of the method 300 are stored at the memory 204 for example, as the application 206. The method 300 is one way in which the system 100 may be configured. Furthermore, the following discussion of the method 300 will lead to a further understanding of the system 100, and its various components.

The method 300 need not be performed in the exact sequence as shown and likewise various blocks may be performed in parallel rather than in sequence. Accordingly, the elements of a method 300 are referred to herein as "blocks" rather than "steps." The method 300 may be implemented on variations of the system 100, as well.

While for simplicity the method 300 is described with respect to the computing unit 106-1 being a first computing unit 106-1, and the computing unit 106-2 being a second computing unit 106-2, the method 300 may be implemented with the functionality of the computing units 106-1, 106-2 being reversed.

At a block 302, the controller 202, and/or the computer system 126, registers one or more peripheral devices 108 in communication with a first computing unit 106-1 via one or more local communication links 110. Registering the one or more peripheral devices 108 virtualizes the one or more peripheral devices 108 at the computer system 126 thereby making the one or more peripheral devices 108 available for use by computing units 106 in communication with the computer system 126. Furthermore, registering the one or more peripheral devices 108 occurs via a peripheral device virtualization application 112-1 installed at the first computing unit 106-1 in communication with the computer system 126.

For example, the virtualization application 112-1 may monitor peripheral device registration data stored at the first computing unit 106-1 and, when a new peripheral device 108-1 is registered at the first computing unit 106-1 (e.g., locally connected to the first computing unit 106-1), the virtualization application 112-1 may transmit the registration data to the device server 102, and optionally with a location thereof, which may store the registration data and the location at the list 120.

In particular, registering the one or more peripheral devices 108 may comprise: receiving, at the computer system 126, from the peripheral device virtualization application 112-1, registration data indicating the one or more peripheral devices 108-1; and storing the registration data at the memory 118.

Alternatively or in addition, registering the one or more peripheral devices 108-1 may occur via the device server 102 of the computer system 126, that is in communication with a device client 104 of the computer system 126.

Furthermore, has already been described, the one or more local communication links 110-1 may comprise at least one wired communication link.

Furthermore, has already been described, the one or more local communication links 110-1 may comprise at least one wireless local communication link 110

At a block 304, the controller 202, and/or the computer system 126, receives, from a second computing unit 106-2, a request for the list 120 of the one or more peripheral devices 108.

For example, such a request may occur via the browser application 114-2 installed at the second computing unit 106-2, which may be used in conjunction with a peripheral device application (not depicted) installed at the second computing unit 106-2, or provided via the browser application 114-2 (e.g., see the example of FIG. 4 to FIG. 7. For example, a peripheral device application may be operated to control a peripheral device 108, and the browser application 114-2 may be used to request the list 120 from the device client 104 to select a peripheral device 108-1 locally communicatively coupled to the first computing unit 106-1 for use by the second computing unit 106-2.

At a block 306, the controller 202, and/or the computer system 126, provides, to the second computing unit 106-2, the list 120 of the one or more peripheral devices 108.

It is understood that the device client 104 may receive the request at the block 304 and request the list 120 from the device server 102, and provide the list 120 to the browser application 114-2 installed at the second computing unit 106-2 via a web-based interface.

Indeed, the browser application 114-2 may be used to initiate the block 304 and the block 306. For example, launching of the browser application 114-2 may occur to access a peripheral device application provided by of the second network 124 via a web-based interface and hence the block 304 may be initiated when the browser application 114-2 is used to access the peripheral device application and subsequently select a peripheral device 108-1. In these examples, a peripheral device application may comprise one of the applications 128.

Alternatively, or in addition, when a peripheral device application is installed locally at the second computing unit 106-2, the browser application 114-2 may be a component of the peripheral device application and used to select a peripheral device 108-1.

At a block 308, the controller 202, and/or the computer system 126, receives, from the second computing unit 106-2, a selection of a peripheral device 108-1, of the one or more peripheral devices 108-1.

For example, a user of the second computing unit 106-2 may interact with the browser application 114-2 via a display screen and input devices of the second computing unit 106-2 and the like, to select a peripheral device 108-1 installed at the first computing unit 106-1. For example, the list 120 may be provided at a display screen within the browser application 114-2, and an input device may be used to select a peripheral device 108-1.

It is further understood that while the method 300 is being described with respect to only two computing units 106, when the list 120 is used to select a remote peripheral device 108, for example via the browser application 114-2, the list 120 may include peripheral devices 108 at a plurality of computing units 106, for example organized by location, and any suitable peripheral device 108 may be selected.

Furthermore, the list 120 may be filtered by the device server 102 and/or the device client 104 and/or a respective peripheral device application 128, and the like, to show only those remote peripheral devices 108 that are at a same location and/or area as the second computing unit 106-2 and/or within a given threshold distance, as has been previously described.

Furthermore, as the list 120 may indicate types of the available remote peripheral devices 108, the list 120 may be filtered by the device server 102 and/or the device client 104 and/or a respective peripheral device application to show only those remote peripheral devices 108 that are usable by the peripheral device application being used at the second client device 106-2.

For example, when the peripheral device application comprises a printer application, the list 120 in the browser application 114-2 may show only available peripheral devices 108 that are printers. Indeed, in this example, the list 120 in the browser application 114-2 may show only available peripheral devices 108 that are printers that are at a same location and/or area as the second computing unit 106-2 and/or within a given threshold distance, as has been previously described.

At a block 310, the controller 202, and/or the computer system 126, enables use of the peripheral device 108 at the first computing unit 106-1, by the second computing unit 106-2, via the peripheral device virtualization application 112 at the first computing unit 106-1.

For example, enabling use of the peripheral device 108-1 by the second computing unit 106-2 may comprise: exchanging data between two or more of: the peripheral device 108-1, the peripheral device virtualization application 112-1 (e.g., via a respective device client), the second computing unit 106-2, the device server 102 of the computer system 126, and the device client 104 of the computer system 126.

Alternatively, or in addition, enabling use of the peripheral device 108-1 by the second computing unit 106-2 may comprise: providing data for processing by the peripheral device 108-1, from the second computing unit 106-2 to the peripheral device 108-1, via the device client 104 of the computer system 126.

Alternatively, or in addition, enabling use of the peripheral device 108-1 by the second computing unit 106-2 may comprise: providing data generated by the peripheral device 108-1 to the device client 104 of the computer system 126, the data associated with the second computing unit 106-2.

Indeed, an example of such flow of data will be described below with respect to FIG. 4 to FIG. 7.

The method 300 may comprise any other suitable features.

For example, a peripheral device virtualization application 112 may be active when the first computing unit 106-1 is on regardless of whether the first computing unit 106-1 is logged into by a user.

Furthermore, receiving the request for the list 120 of the one or more peripheral devices 108-1 (e.g., at the block 304), providing the list 120 of the one or more peripheral devices 108-1 to the second computing unit 106-21 (e.g., at the block 306), and receiving the selection of the peripheral device 108 1 (e.g., at the block 308) may occur via a web-based interface with the second computing unit 106-2, the web-based interface implemented via the device client 104 of the computer system 126 that is in communication with the device server 102 of the computer system 126 that registers the one or more peripheral devices 108-1.

An example of the method 300 is next described with respect to FIG. 4, FIG. 5, FIG. 6, and FIG. 7, which are substantially similar to FIG. 1, with like components having like numbers. In the following discussion dashed lines are used to show flow of data between the components of the system 100.

Attention is first directed to FIG.4, which depicts the device server 102 receiving (e.g., at the block 302 of the method 300) respective registration data 402-1, 402-2 (e.g., registration data 402) from the computing units 106-1, 106-2 (e.g., via respective device clients), for example when the computing units 106 are turned on and/or when respective peripheral devices 108 are communicatively coupled to the computing units 106. The registration data 402 may include respective locations of the computing units 106 and/or the peripheral devices 108. As depicted, the device server 102 receives the registration data 402 and adds the registration data 402 to the list 120. In some examples the device server 102 may not add a specific subset of registration data 402 when a respective peripheral device 108 is already present at the list 120. Alternatively, or in addition, the device server 102 may remove any peripheral device 108 from the list 120 when an indication of such is not listed in the registration data 402, for example as the absence of an indication of a previously listed peripheral device 108 in the registration data 402 may indicate that the previously listed peripheral device 108 is no longer communicatively coupled to a respective computing unit 106; such an example assumes that the registration data 402 generally includes a listing of all peripheral devices 108 presently locally communicatively coupled to a respective computing units 106.

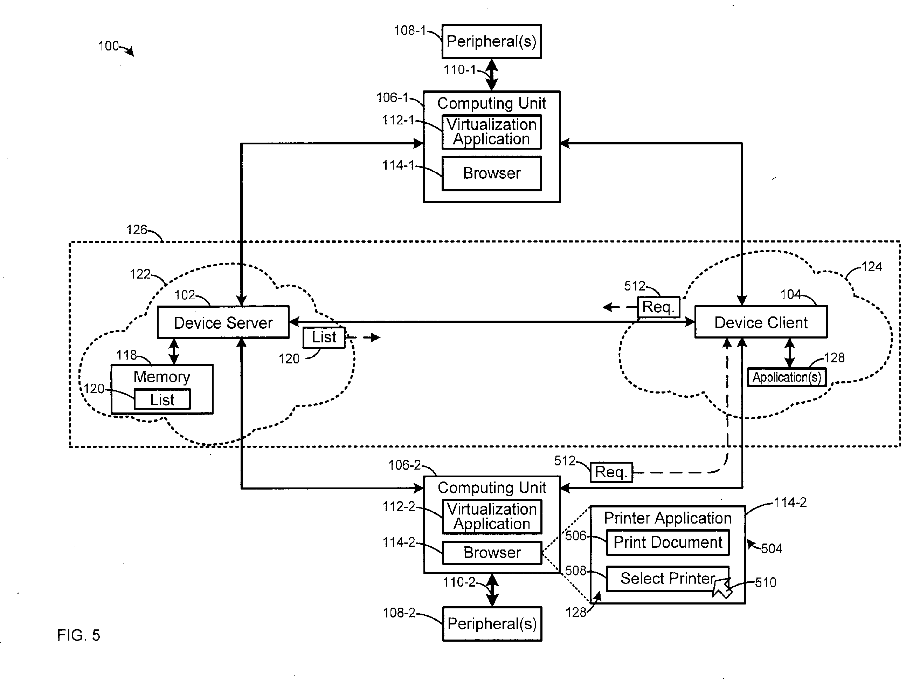

Attention is next directed to FIG. 5, which depicts the second computing unit 106-2 implementing a peripheral device application in the form of a printer application 128, that is implemented via the browser application 114-2. Detail of the printer application 128, implemented via the browser application 114-2, is indicated via broken lines extending from the browser application 114-2, which shows an example of the printer application 128 rendered at a display screen 504 of the second computing unit 106-2. It is understood that the printer application 128 resides in the second network 128, and is implemented and/or hosted at the second network 124 (e.g., via a cloud device), and accessed via the browser application 114-2.

As depicted, the printer application 128 includes two electronic buttons 506, 508, the first electronic button 506, when actuated, for initiating printing of a document, and the second electronic button 508, when actuated, for selecting a printer to print the document. As depicted, a pointer 510 is being operated (e.g., via an input device of the second computing unit 106-2) to select the second electronic button 508, which is understood to initiate a request 512 for the list 120, the request 512 being received (e.g., at the block 304 of the method 300) at the device client 104, which passes on the request 512 to the device server 102 e.g.

However, as the printer application 128 may reside in the second network 124, and is implemented and/or hosted at the second network 124 (e.g., via a cloud device), and accessed via the browser application 114-2, the request 512 shown as being provided from the second computing unit 106-2 to the device client 104 may be optional, and/or provided in the form of selection data, generated via an input device operating the pointer 510, that indicates to the printer application 128 that the second electronic button 508 has been actuated, which causes the printer application 128 to generate and transmit the request 512.

Regardless, the device server 102 provides (e.g., at the block 306 of the method 300) the list 120 in response to receiving the request 514 (or the request 512), which in turn provides the list 120 to the second computing unit 106-2.

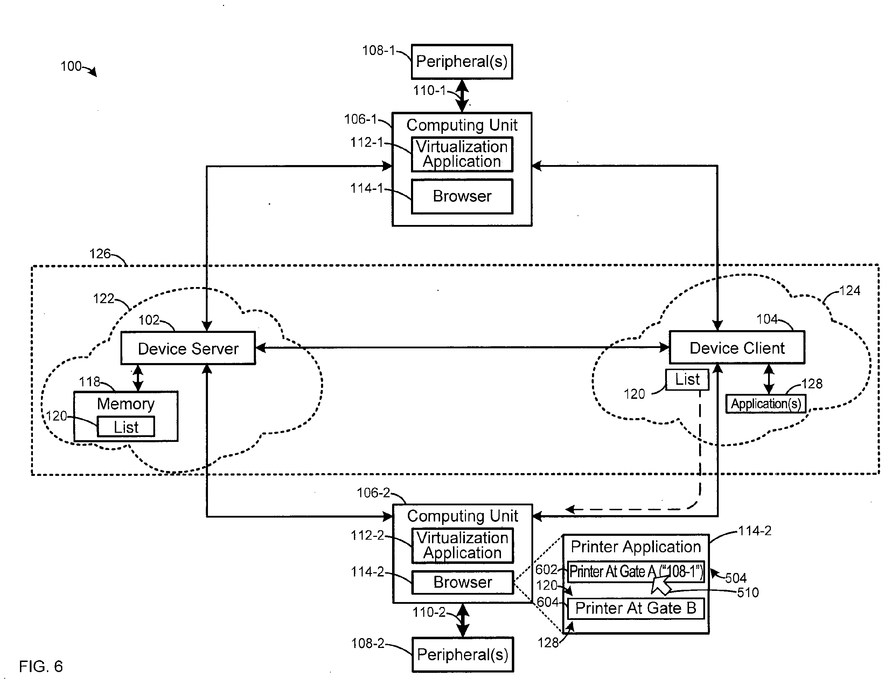

For example, attention is next directed to FIG. 6, which depicts the second computing unit 106-2 receiving the list 120, and providing the list 120 in the printer application 128 via the browser application 114-2 at the display screen 504.

In particular, as depicted, the list 120 is provided in the form of electronic buttons 602, 604 which correspond to respective peripheral devices 108 that are printers. As depicted the list 120 includes a first electronic button 602 for selecting a peripheral device 108-1 in the form of a printer located at "Gate A", which is understood to be one of the peripheral devices 108-1. To demonstrate that the list 120 may include peripheral devices 108 (e.g., printers) communicatively coupled to computing units 106 other than the first computing unit 106-1, the list 120 includes a second electronic button 602 selecting a peripheral device 108 in the form of a printer located at "Gate B". However, in practise, in an airport environment, peripheral devices 108 included at the list 120 may be located at a same gate, though communicatively coupled to a computing unit 106 different from the second computing unit 106-2.

As depicted, the pointer 510 is being operated to select electronic button 602 to select the printer of the peripheral devices 108-1.

Furthermore, while the list 120 is depicted as being provided directly to the second computing unit 106-2, as the printer application 128 may be hosted at the second network 124, the list 120 may be provided to the printer application 128 at the second network 124 and provided to the second computing unit 106-2 via the browser application 114-2 accessing the printer application.

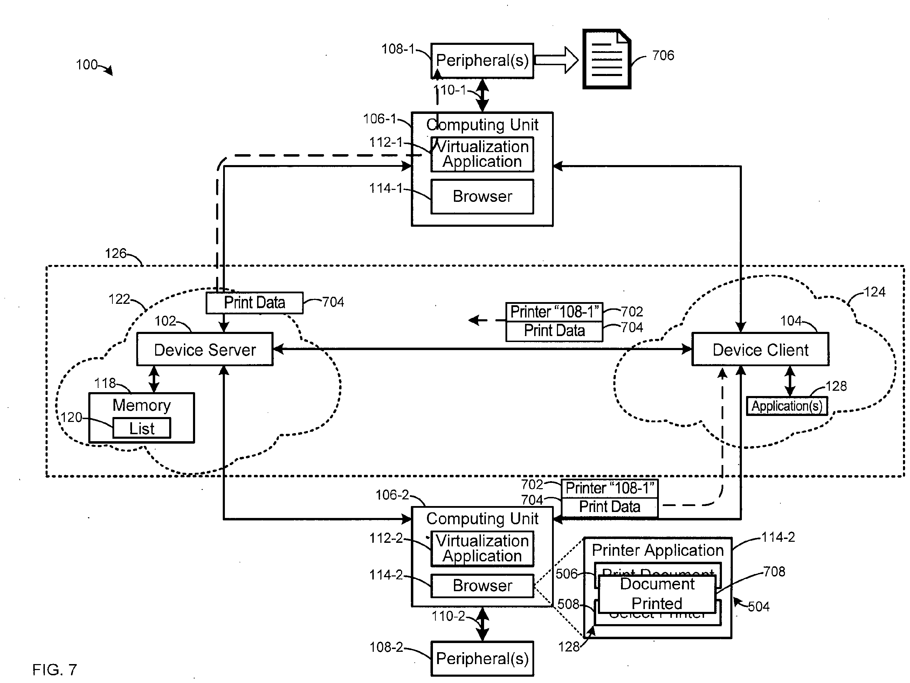

Attention is next directed to FIG. 7, which depicts the second computing unit 106-2 providing, to the device client 104, a selection 702 of the printer of the peripheral devices 108-1, along with print data 704 to be printed at the printer. The device client 104 receives (e.g., at the block 308 of the method 300) the selection 702, along with the print data 704, and provides the selection 702, along with the print data 704, to the device server 102.

Furthermore, while the selection 702 and the print data 704 is depicted as being provided from the second computing unit 106-2, as the printer application 128 may be hosted at the second network 124, the selection 702 and the print data 704 may be selected at the printer application 128 at the second network 124 via the browser application 114-2 accessing the printer application 128, and the selection 702 and the print data 704 may be provided from the printer application 128, via the device client 104, to the device server 102.

Put another way, as the printer application 128 may reside in the second network 128, and is implemented and/or hosted at the second network 124 (e.g., via a cloud device), and accessed via the browser application 114-2, the selection 702 is shown as being provided from the second computing unit 106-2 to the device client 104 may be optional, and/or provided in the form of selection data, and the like, generated via an input device operating the pointer 510, that indicates to the printer application 128 that the first electronic button 602 has been actuated, which causes the printer application 128 to generate and transmit the selection 702, along with the print data 704. The print data 704 may also be generated by the printer application 128 hosted at the second network 124.

The device server 102 receives the selection 702 and, in response, transmits the print data 704 to the virtualization application 112-1 at the first computing unit 106-1 (e.g., via respective device client), which provides the print data 704 to the printer of the peripheral devices 108-1. The printer of the peripheral devices 108-1 responsively prints a document 706 corresponding to the print data 704. In particular, FIG. 7 is understood to show an example of the block 310 of the method 300.

While not depicted, once the document 706 is printed, the printer of the peripheral devices 108-1 may provide an alert indicating the document 706 is printed to the virtualization application 112-1, which may transmit the alert to the device server 102(e.g., via respective device client), which may pass the alert to the device client 104, and which may pass the alert to the second computing unit 102-2 and/or the printer application 128 hosted at the second network 124. Indeed, as depicted, an indication 708 of such an alert indicating the document 706 has printed may be provided at the display screen 504, for example in the printer application 128, which has otherwise reverted to the buttons 506, 508. Put another way, communication between the peripheral devices 108-1 and the second computing unit 106-2 may occur via a path that includes the device client 104, the device server 102 and the virtualization application 112-1.

examples where a selected peripheral device 108-1 comprises a scanner, when the scanner scans a document, and scan data may be generated by the scanner and provided to the second computing unit 106-2 via the virtualization application 112-1, the device server 102, and the device client 104.

In examples where a selected peripheral device 108-1 comprises a boarding pass reader, when the boarding pass reader reads a boarding pass, boarding pass data may be generated by the boarding pass reader and provided to the second computing unit 106-2 via the virtualization application 112-1, the device server 102, and the device client 104. Alternatively, or in addition, in these examples, the boarding pass data may be provided to a boarding pass application 128.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot implement, or digitally interact with, virtualization applications, amongst other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

Although the present specification has been described herein with respect to specific embodiments, it is understood that the specification is not limited to these examples only and that many variations of these embodiments may be readily envisioned by the skilled person after having read the present specification. The present specification may thus further be described without limitation, and by way of example only, by the following embodiments. The following embodiments may contain preferred embodiments. Accordingly, the term "feature combination" as used therein may refer to such a "preferred embodiment".
1. A method comprising:
   registering, via a computer system, one or more peripheral devices in communication with a first computing unit via one or more local communication links, wherein registering the one or more peripheral devices virtualizes the one or more peripheral devices at the computer system thereby making the one or more peripheral devices available for use by computing units in communication with the computer system, and wherein registering the one or more peripheral devices occurs via a peripheral device virtualization application installed at the first computing unit in communication with the computer system;
   receiving, via the computer system, from a second computing unit, a request for a list of the one or more peripheral devices;
   providing, via the computer system, to the second computing unit, the list of the one or more peripheral devices;
   receiving, via the computer system, from the second computing unit, a selection of a peripheral device, of the one or more peripheral devices; and
   enabling, via the computer system, use of the peripheral device at the first computing unit, by the second computing unit, via the peripheral device virtualization application at the first computing unit.
2. The method of feature combination 1, wherein the peripheral device virtualization application is active when the first computing unit is on regardless of whether the first computing unit is logged into by a user.
3. The method of any of the feature combinations 1 to 2, wherein registering the one or more peripheral devices comprises:
   receiving, at the computer system, from the peripheral device virtualization application, registration data indicating the one or more peripheral devices; and
   storing the registration data at a memory.
4. The method of any of the feature combinations 1 to 3, wherein registering the one or more peripheral devices occurs via a device server of the computer system that is in communication with a device client of the computer system.
5. The method of any of the feature combinations 1 to 4, wherein receiving the request for the list of the one or more peripheral devices, providing the list of the one or more peripheral devices to the second computing unit, and receiving the selection of the peripheral device occur via a web-based interface with the second computing unit, the web-based interface implemented via a device client of the computer system that is in communication with a device server of the computer system that registers the one or more peripheral devices.
6. The method of any of the feature combinations 1 to 5, wherein enabling use of the peripheral device by the second computing unit comprises:
   exchanging data between two or more of the peripheral device, the second computing unit, the peripheral device virtualization application, a device server of the computer system, and a device client of the computer system.
7. The method of any of the feature combinations 1 to 6, wherein enabling use of the peripheral device by the second computing unit comprises:
   providing data for processing by the peripheral device, from the second computing unit to the peripheral device, via a device client of the computer system.
8. The method of any of the feature combinations 1 to 7, wherein enabling use of the peripheral device by the second computing unit comprises:
   providing data generated by the peripheral device to a device client of the computer system, the data associated with the second computing unit.
9. The method of any of the feature combinations 1 to 8, wherein the one or more local communication links comprises at least one wired communication link.
10. The method of any of the feature combinations 1 to 10, wherein the one or more local communication links comprises at least one wireless local communication link.
11. A computer system comprising:
   a communication interface;
   a controller; and
   a computer-readable storage medium having stored thereon program instructions that, when executed by the controller, causes the controller to perform a set of operations comprising:
      registering one or more peripheral devices in communication with a first computing unit via one or more local communication links, wherein registering the one or more peripheral devices virtualizes the one or more peripheral devices at the computer system thereby making the one or more peripheral devices available for use by computing units in communication with the computer system, and wherein registering the one or more peripheral devices occurs via a peripheral device virtualization application installed at the first computing unit in communication with the computer system;
      receiving, from a second computing unit, a request for a list of the one or more peripheral devices;
      providing, to the second computing unit, the list of the one or more peripheral devices;
      receiving, from the second computing unit, a selection of a peripheral device, of the one or more peripheral devices; and
      enabling use of the peripheral device at the first computing unit, by the second computing unit, via the peripheral device virtualization application at the first computing unit.
12. The computer system of feature combination 11, wherein the peripheral device virtualization application is active when the first computing unit is on regardless of whether the first computing unit is logged into by a user.
13. The computer system of any of the feature combinations 11 to 12, wherein registering the one or more peripheral devices comprises:
   receiving, at the computer system, from the peripheral device virtualization application, registration data indicating the one or more peripheral devices; and
   storing the registration data at a memory.
14. The computer system of any of the feature combinations 11 to 13, wherein registering the one or more peripheral devices occurs via a device server of the computer system that is in communication with a device client of the computer system.
15. The computer system of any of the feature combinations 11 to 14, wherein receiving the request for the list of the one or more peripheral devices, providing the list of the one or more peripheral devices to the second computing unit, and receiving the selection of the peripheral device occur via a web-based interface with the second computing unit, the web-based interface implemented via a device client of the computer system that is in communication with a device server of the computer system that registers the one or more peripheral devices.
16. The computer system of any of the feature combinations 11 to 15, wherein enabling use of the peripheral device by the second computing unit comprises:
   exchanging data between two or more of the peripheral device, the second computing unit, the peripheral device virtualization application, a device server of the computer system, and a device client of the computer system.
17. The computer system of any of the feature combinations 11 to 16, wherein enabling use of the peripheral device by the second computing unit comprises:
   providing data for processing by the peripheral device, from the second computing unit to the peripheral device, via a device client of the computer system.
18. The computer system of any of the feature combinations 11 to 17, wherein enabling use of the peripheral device by the second computing unit comprises:
   providing data generated by the peripheral device to a device client of the computer system, the data associated with the second computing unit.
19. The computer system of any of the feature combinations 11 to 18, wherein the one or more local communication links comprises at least one wired communication link.
20. The computer system of any of the feature combinations 11 to 19, wherein the one or more local communication links comprises at least one wireless local communication link.

## Claims

1. A method (300) comprising:
registering (302), via a computer system (126), one or more peripheral devices (108-1) in communication with a first computing unit (106-1) via one or more local communication links (110-1), wherein registering the one or more peripheral devices (108-1) virtualizes the one or more peripheral devices (108-1) at the computer system (126) thereby making the one or more peripheral devices (108-1) available for use by computing units (106) in communication with the computer system (126), and wherein registering the one or more peripheral devices (108-1) occurs via a peripheral device virtualization application (112-1) installed at the first computing unit (106-1) in communication with the computer system (126);
receiving (304), via the computer system (126), from a second computing unit (108-2), a request for a list (120) of the one or more peripheral devices (108-1);
providing (306), via the computer system (126), to the second computing unit (108-2), the list (120) of the one or more peripheral devices (108-1);
receiving (308), via the computer system (126), from the second computing unit (108-2), a selection of a peripheral device (108-1), of the one or more peripheral devices (108-1); and
enabling (310), via the computer system (126), use of the peripheral device (108-1) at the first computing unit (106-1), by the second computing unit (108-2), via the peripheral device virtualization application (112-1) at the first computing unit (106-1).

2. The method (300) of claim 1, wherein the peripheral device virtualization application (112-1) is active when the first computing unit (106-1) is on regardless of whether the first computing unit (106-1) is logged into by a user.

3. The method (300) of claim 1, wherein registering the one or more peripheral devices (108-1) comprises:
receiving, at the computer system (126), from the peripheral device virtualization application (112-1), registration data (402-1) indicating the one or more peripheral devices (108-1); and
storing the registration data (402-1) at a memory (118).

4. The method (300) of claim 1, wherein registering the one or more peripheral devices (108-1) occurs via a device server (102) of the computer system (126) that is in communication with a device client (104) of the computer system (126).

5. The method (300) of claim 1, wherein receiving the request for the list (120) of the one or more peripheral devices (108-1), providing the list (120) of the one or more peripheral devices (108-1) to the second computing unit (108-2), and receiving the selection of the peripheral device (108-1) occur via a web-based interface with the second computing unit (108-2), the web-based interface implemented via a device client (104) of the computer system (126) that is in communication with a device server (102) of the computer system (126) that registers the one or more peripheral devices (108-1).

6. The method (300) of claim 1, wherein enabling use of the peripheral device (108-1) by the second computing unit (108-2) comprises:
exchanging data between two or more of the peripheral device (108-1), the second computing unit (108-2), the peripheral device virtualization application (112-1), a device server (102) of the computer system (126), and a device client (104) of the computer system (126).

7. The method (300) of claim 1, wherein enabling use of the peripheral device (108-1) by the second computing unit (108-2) comprises:
providing data for processing by the peripheral device (108-1), from the second computing unit (108-2) to the peripheral device (108-1), via a device client (104) of the computer system (126).

8. The method (300) of claim 1, wherein enabling use of the peripheral device (108-1) by the second computing unit (108-2) comprises:
providing data generated by the peripheral device (108-1) to a device client (104) of the computer system (126), the data associated with the second computing unit (108-2).

9. The method (300) of claim 1, wherein the one or more local communication links (110-1) comprises at least one wired communication link.

10. The method (300) of claim 1, wherein the one or more local communication links (110-1) comprises at least one wireless local communication link.

11. A computer system (126) comprising:
a communication interface (208);
a controller (202); and
a computer-readable storage medium (204) having stored thereon program instructions (206) that, when executed by the controller (202), causes the controller (202) to perform a set of operations comprising the method (300) of any one of claims 1 to 10.

12. A non-transitory computer-readable storage medium (204) having stored thereon program instructions (206) that, when executed by at least one computing device (200), causes the at least one computing (200) to perform the method (300) of any one of claims 1 to 10.
